# EUROPÄISCHE PATENTSCHRIFT

(11) **EP 0 351 006 B1**
(45) Veröffentlichungstag und Bekanntmachung des Hinweises auf die Patenterteilung: **01.06.1994**
(21) Anmeldenummer: 89201799.7
(22) Anmeldetag: 07.07.1989
(51) Int. Cl.: G01L 1/22

(54) **Druck- bzw. Kraftaufnehmer mit einer axialsymmetrischen, druck- bzw. kraftaufnehmenden Kreisplattenfeder**
Pressure or force transducer using an axial-symmetric circular spring
Transducteur de pression ou de force utilisant un ressort circulaire à symétrie axiale

(30) Priorität: 13.07.1988 DE 3823673
(43) Veröffentlichungstag der Anmeldung: 17.01.1990
(73) Patentinhaber: Philips Patentverwaltung GmbH, 22335 Hamburg (DE); Philips Electronics N.V., 5621 BA Eindhoven (NL)
(72) Erfinder: Bethe, Klaus, Prof.Dr., D-3300 Braunschweig (DE)
(74) Vertreter: Hartmann, Heinrich, Dipl.-Ing.

(56) Entgegenhaltungen:
- DE-A- 2 326 218
- GB-A- 2 000 597
- PATENT ABSTRACTS OF JAPAN, Band 7, Nr. 38 (P-176)[1183], 16. Februar 1983; & JP-A-57 190 241

## Beschreibung

Die Erfindung bezieht sich auf einen Druck- bzw. Kraftaufnehmer mit einer axialsymmetrischen, druck- bzw. kraftaufnehmenden Kreisplattenfeder mit Dehnungsmeßstreifen, die einen verstärkten zentrosymmetrischen als Auflager auf einem Träger dienenden Randbereich aufweist.

Aus der DE-C-27 29 064 (Prio-Anmeldung zur GB-A-2 000 597) ist eine symmetrische flache Kraftmeßzelle bekannt, bei der bereits versucht wird, die Problematik der radialen Deformation eines Außenflansches einer Kraftmeßzelle zu lösen bzw. zu minimieren. In dieser Schrift werden dazu zwei im Federverhalten praktisch identische Kreisplattenfedern benutzt, die sich durch einen zwischen ihnen auf der jeweiligen inneren Planfläche angeordneten Auflagerring abstützen. Nach heutigen Erkenntnissen beträgt bei einer derartigen Kraftmeßzelle die am Auflagerpunkt noch immer herrschende Radialdehnung bis zu 30 % der zur Messung mit Dehnungsmeßstreifen benutzten Maximaldehnung. Die Rückwirkungsfreiheit gegenüber dieser noch immer sehr erheblichen Radialdehnung im Auflagerpunkt wird bei dieser bekannten Kraftmeßzelle dadurch erreicht, daß die beiden Kreisplattenfedern gleich große Radialdehnungen im Auflager aufweisen. Die weiter bei dieser bekannten Kraftmeßzelle vorhandenen seitlichen Verklammerungen der Kreisplattenfedern tragen dazu in dieser Kraftrichtung keinerlei Last und dienen nur der Verbindung der Kreisplattenfedern.

Ein weiterer Kraftaufnehmer ist aus der DE-A-11 29 317 bekannt. Dieser weist eine axialsymmetrische Kreisplattenfeder mit einem verstärkten Randbereich sowie einem verstärkten Zentrum zur Krafteinleitung auf. An den Stellen größter Dehnung bzw. Stauchung der Kreisplattenfeder sind Dehnungsmeßstreifen angeordnet, aus denen ein der auf die Kraftmeßzelle wirkenden Kraft entsprechendes elektrisches Signal abgeleitet wird. Drei um 120° versetzte und am verstärkten, biegesteifen Randbereich der Kreisplattenfeder angreifende Schraubbolzen stützen sich gegen eine als Träger ausgebildete Unterlage ab. Bei diesem Kraftaufnehmer tritt bei einer Belastung der Kreisplattenfeder neben der gewünschten Biegedeformation der Kreisplattenfeder auch eine Verkippung des verstärkten Randbereiches nach außen auf. Das führt zu einer radialen Relativbewegung zwischen Schraubbolzen und Unterlage. Diese radiale Ausweichbewegung des verstärkten Randbereiches der Kreisplattenfeder tritt umso stärker auf, je kleiner der Radius der Kreisplattenfeder bei sonst gleichen Abmessungen ist. Weiterhin entstehen zwischen Schraubbolzen und Unterlage Gleitbewegungen bei Temperaturänderungen. Aufgrund dieser Effekte weist die elektrische Spannungs-Kraft-Kennlinie einer solchen Kraftmeßzelle eine Hysterese auf. Auch zeigt sich, daß die Kennlinie nicht gut reproduzierbar ist und daß sie sich bei Temperaturschwankungen verändert.

Der Erfindung liegt die Aufgabe zugrunde, einen Druck- bzw. Kraftaufnehmer zu schaffen, der bei vorgegebener Auslegung der Kreisplattenfeder eine spezielle Auflagerung einer Kreisplattenfeder aufweist, die technisch gesehen keine Radialbewegung aufweist und Verkippung zuläßt.

Diese Aufgabe wird erfindungsgemäß dadurch gelöst, daß als abstützender Träger ein dünnwandiges, zylindrisches, federelastiches Rohr verwandt wird, dessen Erzeugende auf der Ebene, in der die Kreisplattenfeder liegt, senkrecht steht und dessen Durchmesser derart bemessen ist, daß das Rohr den Randbereich auf dessen zylindrischem Außenrand genau in der Höhe in einer umlaufenden Ringzone abstützt, in der die Radialbewegung der Ringzone (10) bei Belastung der Kreisplattenfeder einen Nulldurchgang hat.

Es hat sich bei dem erfindungsgemäßen Druck- bzw. Kraftaufnehmer gezeigt, daß bei Belastung neben der gewünschten Deformation der Kreisplattenfeder auch ein Kippen des verstärkten Randbereiches nach innen auftritt und zwar um eine ringförmige Linie auf dem Mantel des verstärkten Randbereiches, welche die radialdehnungsfreie Zone darstellt. Da der erfindungsgemäße Druck- bzw. Kraftaufnehmer so ausgestaltet ist, daß der Träger mit dem verstärkten Randbereich der Kreisplattenfeder dort verbunden ist, wo die Radialdehnung annähernd Null ist, ergibt sich bei Belastung keine Gleitbewegung zwischen Träger und Kreisplattenfeder. Bei dem erfindungsgemäßen Druck- bzw. Kraftaufnehmer zeigt sich gegenüber dem bekannten Kraftaufnehmer eine verringerte Hysterese der elektrischen Spannungs-Kraft-Kennlinie, weil keine Relativbewegung zwischen Träger und Kreisplattenfeder bei Belastung auftritt. Außerdem ist die Kennlinie weitgehend reproduzierbar. Auch bei Temperaturschwankungen verändert sich die Kennlinie nur in exakt reproduzierbarer, eindeutiger Weise.

Bei einer Weiterbildung der Erfindung ist vorgesehen, daß die Kreisplattenfeder am trägerseitigen Außenrand des verstärkten Randbereiches eine ringförmige Einschnürung aufweist, in die der als federelastisches Metallrohr ausgebildete Träger eingreift, wobei eine in Richtung zur Endfläche des Metallrohres zeigende, als Auflagefläche dienende Fläche der Einschnürung in der praktisch radialdehnungsfreien Ringzone verläuft. Hierdurch ergibt sich eine einfach herzustellender Druck- bzw. Kraftaufnehmer, bei der eine am Außenrand verlaufende gleichmäßige Einschnürung an der Kreisplattenfeder vorhanden ist. Als Träger dient ein dünnes federelastisches Metallrohr, welches ein Verkippen der Kreisplattenfeder am verstärkten Randbereich federelastisch aufnimmt. Die als Auflagefläche dienende Fläche der im Querschnitt annähernd rechtwinklig ausgebildeten Einschnürung ist vorzugsweise mit der gegenüberliegenden Endfläche des federelastischen Metallrohres verschweißt, verlötet oder verklebt. Der Träger kann auch als federelastisches Metallrohr mit einem im Inneren des Metallrohres verlaufenden Ansatz (Wandverdickung) ausgebildet sein, die in eine um die Kreisplattenfeder verlaufende Ringnut eingreift, welche in der praktisch radialdehungsfreien Ringzone verläuft

Die der Kreisplattenfeder abgewandte Endfläche des federelastischen Metallrohres ist als federelastische Platte ausgebildet, die einen zentrisch liegenden Auflagestutzen besitzt, um sowohl Schräglasten als auch Unebenheiten der Unterlage, auf welcher der Auflagestutzen aufliegt, von der Kreisplattenfeder fernzuhalten. Es ist auch möglich, elastische Biegeelemente direkt im Auflagestutzen zu integrieren, um Schräglasten und Unebenheiten auszugleichen. Um die Temperaturempfindlichkeit der erfindungsgemäßen Kraftmeßzelle zu verringern, sind der Träger aus dünnwandigem federelastischem Metallrohr und die federelastische Platte vorzugsweise aus einem Stück und aus demselben Material wie die Kreisplattenfeder gefertigt.

Zur Erhöhung der Meßempfindlichkeit ist vorgesehen, daß die zum Träger weisende Seite der Kreisplattenfeder im wesentlichen flach und die andere Seite der Kreisplattenfeder zwischen dem verstärkten Randbereich und einem als Krafteinleitungspunkt dienenden, verstärkten Zentrum profiliert ist, wobei in den Regionen größter Dehnung bzw. Stauchung Dehnungsmeßstreifen in radialer oder tangentialer Richtung angeordnet sind. Das verstärkte Zentrum bietet eine genügend große Fläche zur Einleitung eines Druckes oder einer Kraft auf die Kreisplattenfeder.

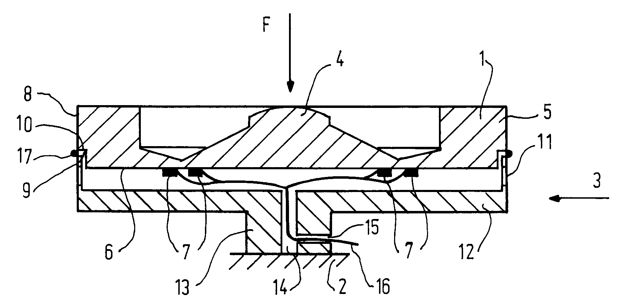

Ein Ausführungsbeispiel der Erfindung wird nachstehend anhand der Zeichnung, die einen Schnitt durch einen Kraftaufnehmer zeigt, näher erläutert.

Der Kraftaufnehmer enthält eine axialsymmetrische Kreisplattenfeder 1 und einen die Kreisplattenfeder 1 tragenden und auf einer Unterlage 2 liegenden Träger 3. Die zur Kraftaufnahme geeignete Kreisplattenfeder 1 weist ein als Krafteinleitungspunkt dienendes, verstärktes Zentrum 4 auf, das, um eine definierte Kraftwirkungsrichtung zu erhalten, kuppelförmig ausgebildet ist. Die Kreisplattenfeder 1 weist einen verstärkten, biegesteifen Randbereich 5 auf, der als Auflager für den Träger 3 dient. Zur Erzielung eines geeigneten radialen Dehnungsverlaufes besitzt die Kreisplattenfeder 1 eine über den Radius variierende Dicke. Zwischen dem verstärkten Randbereich 5 und dem Zentrum 4 ist ein rinnenförmiger, um das Zentrum 4 verlaufender Einschnitt vorhanden. Die der Krafteinleitung abgewandte Seite 6 der Kreisplattenfeder 1 ist im wesentlichen flach. Auf dieser Seite 6 sind in den Bereichen größter Dehnung bzw. Stauchung die Dehnungsmeßstreifen 7 in radialer oder tangentialer Richtung aufgebracht.

Am Außenrand 8 des verstärkten Randbereiches 5 ist in Richtung zum Träger 3 eine ringförmige, im Querschnitt rechtwinklige Einschnürung 9 vorhanden. Die als Auflagefläche 10 ausgebildete Fläche der Einschnürung 9, die zum Träger 3 zeigt und parallel zur Seite 6 der Kreisplattenfeder 1 verläuft, liegt in einer Ringzone der Kreisplattenfeder, in der die Radialdehnung praktisch Null ist. Der Träger 3 ist als dünnwandiges federelastisches Metallrohr 11 ausgebildet, welches in die Einschnürung 9 der Kreisplattenfeder 1 eingreift. Die Auflagefläche 10 und die Endfläche des federelastischen Metallrohres 11 sind durch eine Schweißnaht 17 verbunden. Die Verbindung kann auch durch Verlöten oder Verkleben hergestellt werden. Bei einer Belastung tritt neben der gewünschten Deformation der Kreisplattenfeder 1 auch ein Kippen des verstärkten Randbereiches 5 auf und zwar um einen Punkt des verstärkten Randbereiches 5, der sich an der Verbindungsstelle (Schweißnaht 17) zwischen Auflagefläche 10 und der Endfläche des dünnwandigen federelastischen Metallrohres 11 befindet. Zwischen der Kreisplattenfeder 1 und dem Träger 3 findet also keine Gleitbewegung statt. Das federelastische Metallrohr 11 muß lediglich ein Verkippen des verstärkten Randbereiches 5 federelastisch aufnehmen.

Die der Kreisplattenfeder 1 abgewandte Endfläche des dünnwandigen federelastischen Metallrohres 11 endet in einer federelastisch ausgebildeten Platte 12. Diese federelastische Platte 12 weist einen zentrisch liegenden Auflagestutzen 13 auf, der auf der Unterlage 2 aufliegt. Im Zentrum des Auflagestutzens 13 verläuft eine Bohrung 14. Eine weitere zwischen der Bohrung 14 und dem Außenrand des Auflagestutzens 13 angebrachte Bohrung 15 dient ebenso wie die Bohrung 14 als Zuleitungsführung für Leitungen 16, die zu den Dehnungsmeßstreifen 7 führen. Der vorzugsweise aus einem Stück gefertigte Träger 3, der aus dem dünnwandigen federelastischen Metallrohr 11 und der federelastischen Platte 12 besteht, dient auch dazu, sowohl Schräglasten als auch Unebenheiten der Unterlage 2 von der Kreisplattenfeder fernzuhalten. Der Träger 3 und die Kreisplattenfeder 1 sollten aus dem gleichen Werkstoff bestehen.

Der Kraftaufnehmer kann ebenfalls zur Aufnahme von Zugkräften dienen. Hierzu muß das als Krafteinleitungspunkt dienende verstärkte Zentrum 4 mit einem Zugkraftanschluß versehen werden.

Die Befestigung der Kreisplattenfeder in ihren verstärkten Randbereich auf der Linie der Ringzone, die als Drehpunkt der Randverkippung einen Nulldurchgang der Radialdehnung aufweist, ist weiterhin auch für Druckaufnehmer mit profilierter oder ebener Kreisplattenfeder zwischen dem verstärkten Randbereich zu verwenden.

## Patentansprüche

1. Druck- bzw. Kraftaufnehmer mit einer axialsymmetrischen, druck- bzw. kraftaufnehmenden Kreisplattenfeder (1) mit Dehnungsmeßstreifen (7), die einen verstärkten zentrosymmetrischen als Auflager auf einem Träger (3) dienenden Randbereich (5) aufweist,
dadurch gekennzeichnet, daß als abstützender Träger (3) ein dünnwandiges, zylindrisches, federelastisches Rohr (11) verwandt wird, dessen Erzeugende auf der Ebene, in der die Kreisplattenfeder (1) liegt, senkrecht steht und dessen Durchmesser derart bemessen ist, daß das Rohr (11) den Randbereich (5) auf dessen zylindrischem Außenrand (8) genau in der Höhe in einer umlaufenden Ringzone (10) abstützt, in der die Radialbewegung der Ringzone (10) bei Belastung der Kreisplattenfeder einen Nulldurchgang hat.

2. Druck- bzw. Kraftaufnehmer nach Anspruch 1,
dadurch gekennzeichnet, daß die Kreisplattenfeder (1) am trägerseitigen Außenrand (8) des verstärkten Randbereiches (5) eine ringförmige Einschnürung (9) aufweist, in die der als federelastisches Metallrohr ausgebildete Träger (3) eingreift, wobei eine in Richtung zur Endfläche des Metallrohres (11) zeigende, als Auflagefläche (10) dienende Fläche der Einschnürung (9) in der praktisch radialdehnungsfreien Ringzone verläuft.

3. Druck- bzw. Kraftaufnehmer nach Anspruch 2,
dadurch gekennzeichnet, daß die als Auflagefläche (10) dienende Fläche der im Querschnitt annähernd rechtwinklig ausgebildeten Einschnürung (9) mit der gegenüberliegenden Endfläche des federelastischen Metallrohres (11) verschweißt, verlötet oder verklebt ist.

4. Druck- bzw. Kraftaufnehmer nach Anspruch 2 oder 3,
dadurch gekennzeichnet, daß die der Kreisplattenfeder (1) abgewandte Endfläche des federelastischen Metallrohres (11) als federelastische Platte (12) ausgebildet ist, die einen zentrisch liegenden Auflagestutzen (13) besitzt.

5. Druck- bzw. Kraftaufnehmer nach einem der vorhergehenden Ansprüche,
dadurch gekennzeichnet, daß die zum Träger (3) weisende Seite (6) der Kreisplattenfeder (1) im wesentlichen flach und die andere Seite der Kreisplattenfeder zwischen dem verstärkten Randbereich (5) und einem als Krafteinleitungspunkt dienenden verstärkten Zentrum (4) profiliert ist, wobei in den Regionen größter Dehnung bzw. Stauchung Dehnungsmeßstreifen (7) in radialer oder tangentialer Richtung angeordnet sind.

## Claims

1. A pressure or force sensor, comprising an axially symmetric pressure-receiving or force-receiving circular plate spring (2) with strain gauges (7) and a thickened centro-symmetric edge region (5) which serves as a surface for bearing on a support (3),
characterized in that for the bearing support (3) use is made of a thin-walled, cylindrical, resilient tube (11) whose generatrix extends perpendicularly to the plane in which the circular plate spring (1) is situated and whose diameter is proportioned so that the tube (11) supports the edge region (5) at its cylindrical outer edge (8) exactly at the level within a circumferential annular zone (10) at which the radial movement of the annular zone (10) exhibits a zero crossing when the circular plate spring is loaded.

2. A pressure or force sensor as claimed in Claim 1,
characterized in that the circular plate spring (1) is provided, at the outer edge (8) of the thickened edge region (5) which faces the support, with an annular constriction (9) which is engaged by the support (3) which is constructed as a resilient metal tube, a surface of the constriction (9) which faces the end face of the metal tube (11) and serves as a supporting surface (10) extending in the substantially radial strain-free annular zone.

3. A pressure or force sensor as claimed in Claim 2,
characterized in that the constriction (9) has a substantially right-angled cross-section, its surface which serves as the bearing surface (10) being welded, soldered or cemented to the facing end face of the resilient metal tube (11).

4. A pressure or force sensor as claimed in Claim 2 or 3,
characterized in that the end face of the resilient metal tube (11) which is remote from the circular plate spring (1) is constructed as a resilient plate (12) which is provided with a centrally located bearing support (13).

5. A pressure or force sensor as claimed in any one of the preceding Claims,
characterized in that the side (6) of the circular plate spring (1) facing the support (3) is basically flat and the other side of the circular plate spring between the thickened edge region (5) and a thickened central part (4) which serves as a force-application point is profiled, strain gauges (7) being arranged in the radial or tangential direction in the regions having the greatest strain or compression.

## Revendications

1. Transducteur de pression ou de force comportant un ressort (1) à disque à symétrie axiale recevant la pression ou la force et pourvu de jauges de contrainte (7), ressort qui présente une partie marginale centrosymétrique (5) renforcée servant d'appui sur un support (3), caractérisé en ce que comme support (3), il est prévu un tube élastique cylindrique à paroi mince (11) dont la génératrice est perpendiculaire au plan dans lequel est situé le ressort à disque (1) et dont le diamètre est choisi de façon que le tube (11) supporte la partie marginale (5) à son bord extérieur cylindrique (8) dans une zone annulaire (10), juste au niveau où le mouvement radial de la zone annulaire (10) présente un passage par zéro lors de la sollicitation du ressort à disque.

2. Transducteur de pression ou de force selon la revendication 1, caractérisé en ce que le ressort à disque (1) au bord extérieur (8) de la partie marginale renforcée (5) situé du côté du support, le ressort à disque présente un étranglement annulaire (9) dans laquelle s'engage le support (3) réalisé sous la forme d'un tube métallique élastique, une surface de l'étrangement (9) dirigée vers la surface terminale du tube métallique (11) et servant de surface d'appui (10) s'étendant dans la zone annulaire pratiquement exempte d'extension radiale.

3. Transducteur de pression ou de force selon la revendication 2, caractérisé en ce que la surface de l'étranglement (10) de section transversale à peu près rectangulaire qui fait fonction de surface d'appui est de préférence fixée par une soudure ou une colle à la surface terminale opposée du tube métallique élastique (11).

4. Transducteur de pression ou de force selon la revendication 2 ou 3, caractérisé en ce que la surface terminale du tube métallique élastique (11) située à l'opposé du ressort à disque (1) est réalisée sous la forme d'une plaque élastique (12) présentant une tubulure d'appui (13) située en position centrale.

5. Transducteur de pression ou de force selon l'une quelconque des revendications précédentes, caractérisé en ce que la face (6) du ressort à disque (1) située du côté du support (3) est essentiellement plate et en ce que l'autre face du ressort à disque, entre la partie marginale renforcée (5) et un centre renforcé (4) servant de point d'application de force, est profilée, les régions à extension ou à compression maximales étant pourvues de jauges de contrainte (7) disposées dans les sens radial ou tangentiel.
